# EUROPEAN PATENT SPECIFICATION

(11) **EP 3 838 552 B1**
(45) Date of publication and mention of the grant of the patent: **28.06.2023**
(21) Application number: 20215582.6
(22) Date of filing: 18.12.2020
(51) Int. Cl.: B29C 51/04

(54) **A METHOD AND TOOL FOR MANUFACTURING A CONTAINER FROM A THERMOPLASTIC MATERIAL**
VERFAHREN UND WERKZEUG ZUR HERSTELLUNG EINES BEHÄLTERS AUS EINEM THERMOPLASTISCHEN MATERIAL
PROCÉDÉ ET OUTIL DE FABRICATION D'UN RÉCIPIENT À PARTIR D'UN MATÉRIAU THERMOPLASTIQUE

(30) Priority: 19.12.2019 GB 201918861
(43) Date of publication of application: 23.06.2021
(73) Proprietor: Softform Limited, Bridgwater, Somerset TA6 5LT (GB)
(72) Inventor: BAKER, Martin, Bridgwater, Somerset TA6 5LT (GB); HANDELL, Leigh, Bridgwater, Somerset TA6 5LT (GB)
(74) Representative: Moore, Derek

(56) References cited:
- EP-A1- 1 544 129
- WO-A1-95/08480
- DE-A1- 19 601 422

## Description

The present invention relates to a method for manufacturing a container from a thermoplastic material, a tool for moulding the container and to containers produced according to the method.

The present disclosure is particularly but not exclusively applicable for packaging products such as fresh meat or fish from which liquid tends to ooze out. This liquid not only makes the appearance of the packaged product unsightly to the consumer but the liquid can lead to deterioration of the product.

Known attempts to eliminate this problem use an absorbent pad placed in the container beneath the product but this results in extra cost for the packaging. It also renders recycling much more difficult since the pad is formed of a different material from the container which must be removed from the container before the container can be recycled. Additionally, such pads are usually glued in position and the glue also needs to be removed for recycling the container. This greatly increases the cost of preparing the containers for recycling and a common solution is to send the containers to landfill which is environmentally disadvantageous. One solution is known, for example, from EP 1 544 129, which provides grooves in the base of the container into which the liquid can flow. However, it has been found that with this solution, liquid forms pools on the base between the grooves which is unsightly and potentially unhygienic. The present disclosure seeks to provide a solution to this problem. WO/08480 (Tetra), D2, discloses a container for food products arranged to hold the product above the base of the container into which liquid from the product can drain, either by protuberances or the use of a perforated substrate or sieve into which the liquid can drain to a zone separate from the product where it may be held by an absorbent material. DE196 01422 (Tetra), D3, relates to a method and tool for deep drawing a material, which may be a mouldable thermoplastic material.

According to the present invention there is provided a tool for thermoforming a container from a thermo-formable material, the container having a base and an upstanding sidewall or walls, the tool including a mould having a profile shaped to form the exterior shape of the container, and a plug adapted to be inserted in the mould to define the interior of the container, the plug having a lower face adapted to define the profile of the base of the container, wherein the profile of the lower face of the plug has at least one closed clamping line having a clamping surface, the mould having a mating clamping line having a clamping surface, the two clamping surfaces being adapted to clamp the material of the base therebetween around a predetermined area of the base to define and secure the material of the predetermined area of the base separate from the remainder of the material of the container, the profile of the lower face of the plug being adapted to form a plurality of hollow projections below the plane of the base to wherein the or each recess comprises a generally annular recess having an outer wall and a central co-axial wall, each recess being adapted, in operation, to receive and retain by capillary action liquid in the container, and in order to prevent liquid forming a pool on the surface of the base of the container between adjacent recesses, the profile of the lower face of the plug shaped so that the surfaces of the base between adjacent recesses are formed with a run-off ramp or ramps to enable liquid on the base of the container to drain into the adjacent recesses.

In a preferred embodiment, the clamping surface of the plug extends around the periphery of the lower face of the plug adjacent the side wall of the container, the clamping surface of the plug being adapted to engage the clamping surface of the mould to clamp the material of the container therebetween to define and secure the material of the base of the container separate from the material of the peripheral wall of the container.

In a further embodiment, the plug has a further clamping surface extending across the container from a first position on the peripheral clamping surface to a 2^{nd} position on the peripheral clamping surface spaced from the first position, the further clamping surface being adapted to engage a further clamping surface of the mould to clamp the material of the container therebetween to define a predetermined area of the base to define and secure the material of the predetermined area of the base separate from the remaining material of the container, said recesses being formed only in said predetermined area.

Preferably, the plug has a peripheral surface extending around the periphery of the lower face of the plug adjacent the side wall of the container and adapted to engage the mould to clamp the material of the container firmly therebetween to define and secure the base of the container separate from the peripheral wall of the container. In this way, the material of the base of the container can be stretched without material from the wall of the container being drawn into the base.

In a preferred embodiment, each recess comprises a generally annular recess. In a preferred embodiment, each annular recess has a hexagonal outer wall and a cylindrical inner wall defining the annular recess.

In another embodiment, the lower face of the plug has a peripheral groove extending around the periphery of the lower face adjacent the side wall of the container, the groove mating with a corresponding peripheral rib upstanding from the base of the mould to clamp the material of the container firmly between the plug and the mould.

In an alternative embodiment, the lower face of the plug has a peripheral rib extending around the periphery of the base adjacent the side wall of the container, the rib mating with a corresponding peripheral groove in the base of the mould to clamp the material of the container firmly between the plug and the mould.

In a preferred embodiment, the profile of the lower face of the plug is formed on an insert secured to the plug. In which case, the insert is located in a recess in the lower face of the plug.

Preferably, the insert is removably secured to the plug to enable the tool to be readily adapted to produce, selectively, a variety of containers having different base profiles.

The invention also provides a method of manufacturing a container from a sheet of thermoplastic material including a mould shaped to define the exterior profile of the container, placing a sheet of thermoplastic material over the mould, warming the sheet of thermoplastic material to a mouldable temperature, the container having a base and an upstanding sidewall wall or walls, providing a plug shaped to provide the internal profile of the container and being adapted to be inserted in the mould to clamp the material to define the container therebetween, forming a lower face of the plug to define the profile of the base of the container, applying a vacuum or air pressure to the plug to draw the sheet of material into the profile of the plug therein to form an array of recesses in the base of the container, forming the or each recess as a generally annular recess having an outer wall and a central co-axial wall. each recess being adapted, in operation, to receive and retain by capillary action liquid in the container, and in order to prevent liquid forming a pool on the surface of the base of the container between adjacent recesses, forming the surfaces between adjacent recesses with a run-off ramp or ramps to enable liquid on the base of the container to drain into the adjacent recesses.

The invention also provides a container formed of a thermoplastic material manufactured in accordance with the aforesaid method.

A preferred embodiment of the present invention will now be described, by way of example, with reference to the accompanying figures in which:-
Figures 1-7 illustrate a cross-section of a tool for manufacturing a container from a thermo-forming sheet material in seven stages of manufacture,
Figure 8 shows a cross-sectional side view of part of the base of the container shown in Figures 1-7 , along the line A-A,
Figure 9 shows a plan view of the base of the container,
Figure 10 shows a perspective view of part of the plug for forming the base of Figure 9, and
Figure 11 shows a perspective view of a moulding plug of a moulding tool.

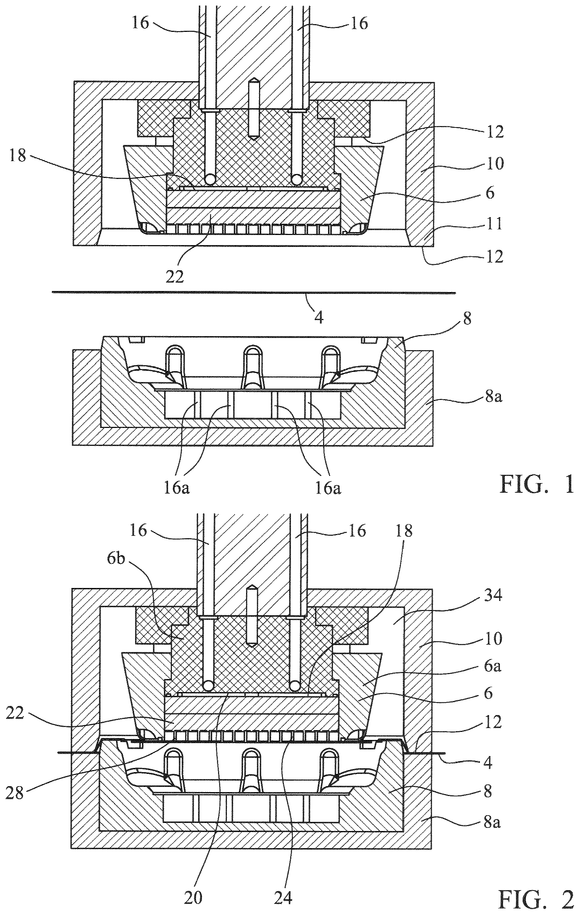

Referring now to Figures 1 to 7 and Figure 1 in particular, there is shown a tool for manufacturing a container 2 from a sheet 4 of thermo-formable plastics material such as polyethylene terephthalate (PET).The container has a peripheral wall 26 and a base 28 and typically being intended for storing and displaying products such fish and meat and the like which may emit liquid whilst being stored and displayed. For convenience, only one tool is illustrated and described but in a practical application, a bank of six or eight of such tools are arranged in a frame 8a (not shown in detail) to produce six or eight containers simultaneously from a large sheet or film of material 4. The container is thus formed as a one-piece moulding which is shaped and cut from the thermoformable sheet or film of material and which in this embodiment comprises PET.

A mould 8 which serves to define the outer shape and dimensions of the container is located in the frame 8a. As shown in Figure 1 and 2, a pressure box 10 is positioned above the mould 8 and has a downwardly extending wall 11, the lower edge 12 of which engages with the frame 8a to provide a substantially airtight seal with the sheet of material 4 clamped therebetween as shown in Figure 2. A plug 6 is located in the pressure box 10, the plug 6 having an outer part 6a and an inner insert 6b movable relative to the outer part 6a and being biased resiliently to a spaced position with a gap, reference A, from the outer part 6a as will be described hereinafter. The inner part 6b of the plug has an interior space 18 connected to a source of vacuum or air pressure through a vacuum or supply pipe or pipes 16.

At its lower face 20, the plug inner part 6b has a recess therein in which is located an insert 22 containing a plurality of projections 24 extending downwardly away from the main interior surface of the container which defines the profile of the base 28 of the container 2. The inner, rear side of the insert 22 is in fluid communication with the space 18 so that the insert 22 and the projections 24 can be subjected to vacuum supplied through the vacuum pipes 16.

As a result, in this embodiment, the material of the base 28 is drawn in or pressed onto the projections 24 to form a plurality of small annular reservoirs 25 in the base of the container, extending below the inner surface of the base, which are adapted to receive and retain by capillary action liquid released from the product in the container.

In an alternative construction, pressurised air is supplied to the underside of the container base 28 between the base 28 and the mould 8 to urge the thermoplastic material upwardly against the underside of plug 14 thereby to finalise and define the form the reservoirs 25. In yet another form, pressurised air is supplied to the underside of the container base 28 at the same time as vacuum is applied to the interior surface of the base 28. The precise size, positioning and shape of the recesses will be described later and will be determined by the intended application and the type of product and size, such as fish, for which the container is intended.

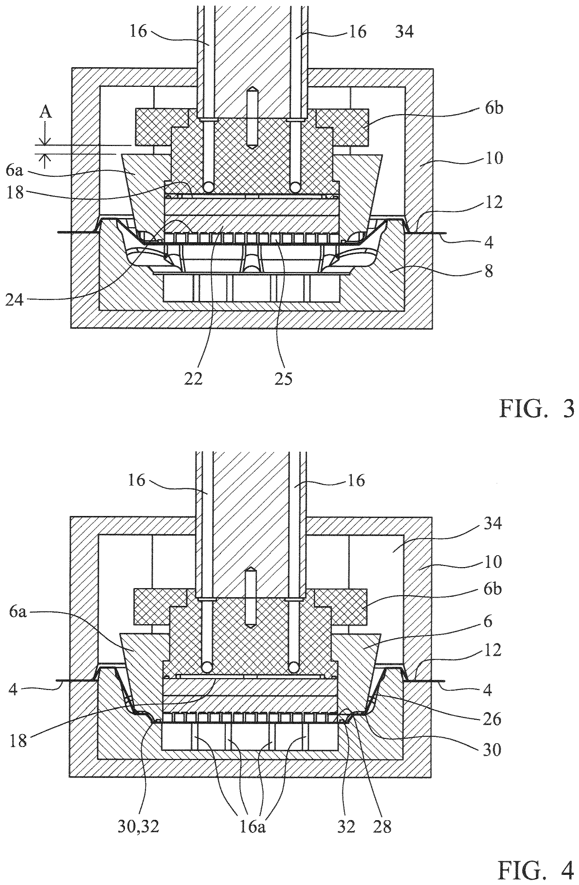

Referring now to Figure 4, in particular, the plug 14 has a peripheral groove 30 extending around the periphery of its lower face 20 which in the moulding position engages in a rib 32 located in the base of the mould just inwardly of the peripheral wall 26 of the container. The peripheral groove 30 and rib 32 serve to securely clamp the material of the container in position to define and secure the peripheral wall 26 of the container separate from the base. In this way, the wall of the container and the base of the container can then be subjected to different pressures. This not only prevents material from the wall being drawn into the base when the base material is deformed thereby to maintain the rigid strength required for the wall but enables the material of the base to be stretched into the recesses without adversely affecting the rigidity of the wall of the container.

In an alternative embodiment (not shown) the rib 32 is located on the lower face of the plug and the groove 30 is formed in the base of the mould. In a further embodiment (not shown) there is no insert and the plug is formed of a metal such as aluminium and the grooves are machined in the lower face of the plug. In another embodiment in which a peripheral rib is formed on the plug, the material of the plug is machined away to leave the peripheral rib standing proud of the remainder of the lower face of the plug.

Figures 1 to 7 show the steps of manufacturing the container in what is a single stage moulding operation. Figure 1 shows the flat sheet 4 of thermal formable material passing through the workstation with the mould 8 below the material and the pressure box 10 and the plug 6 located above the material. Figure 2 shows the first stage where the pressure box 10 is lowered onto the sheet 4 to clamp the sheet of material between the pressure box 12 and the frame part 8a of the mould. As shown, particularly in Figure 2, Figure 3 and Figure 4, to initiate manufacture, the plug 6 is urged downwardly by air pressure in the pressure box 10 into the mould 6 to a position in which the basic shape of the container is formed between the plug outer part 6a and the mould 8. In this position, Figure 3 discloses the plug inserted in the mould to form the basic shape of the container with a peripheral seal formed by the groove and rib seal 30, 32 to provide an airtight seal between the outer wall 26 of the container 2 and the base 28 so that the two parts can have different air pressures applied to them. After this position air under pressure is applied to the exterior surface of the container outside the peripheral groove and rib seal 30, 32. to urge the material forming the wall 26 against the exterior surface of the mould 6a to define the precise shape of the container wall 26.

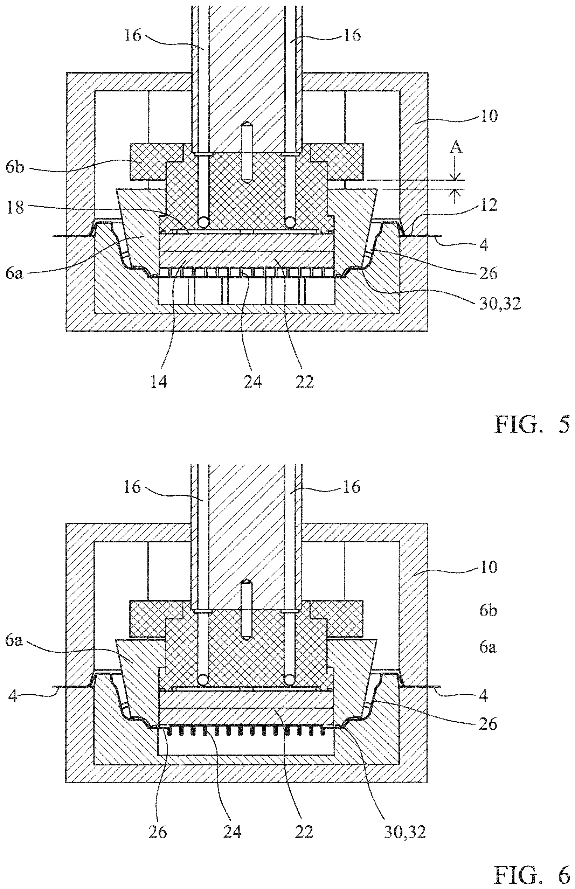

Referring now to Figures 4 and 5, there is shown the formed container in which the peripheral seal formed by the groove and rib seal 30, 32 is formed to secure the container in position. Thereafter, air pressure in the pressure box 10 urges the insert 22 downwardly until it closes the gap, reference A.. In this position the main lower face of the insert 22 is aligned with the main base material of the container with the projections 24 projecting below the base of the container as shown in Figure 6. In this step, the air pressure is applied to the underside of the material forming the container base 28 to push the material up around the projections 24 to form an annular recess in each of the projections and substantially simultaneously, vacuum is supplied to the interior of each projection to draw the material in the centre of each upwardly to form a cylindrical centrepiece thereby to provide in each projection an annular -shaped recess.

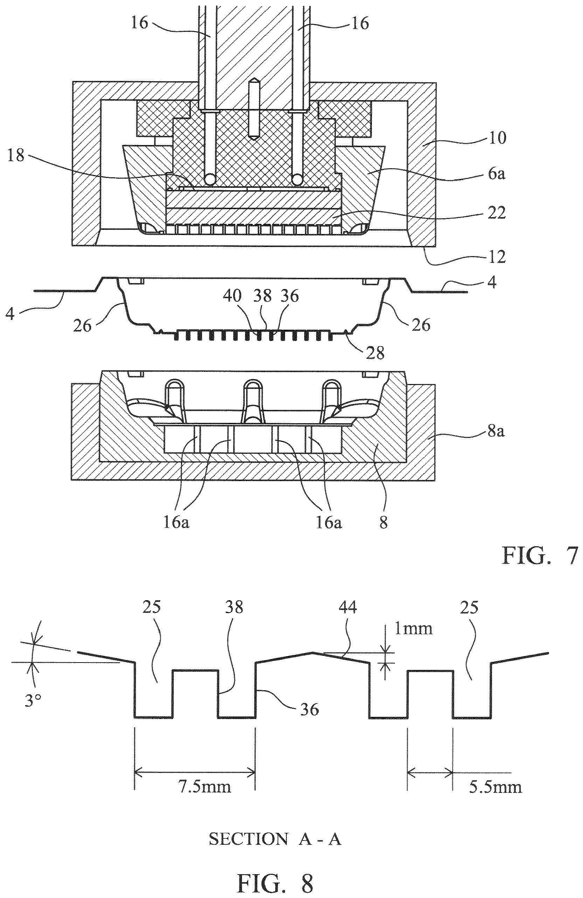

Alternatively, as shown in Figure 4, air pressure applied to the underside of the base 28 of the container through supply channels 16a where it enters into the cylindrical part of the recess from where it is vented into the vacuum pipes 16
Figure 6 illustrates the final step in the manufacture of the container in which the container is shown in its final form. Figure 7 shows the position where the container is released from the forming tool. The pressure box 10 carrying the plug 14 is raised and a short blast of pressurised air is applied to the underside of the container to assist in the release of the finished container from the mould 8. Further, the walls of the recesses have a draught angle of typically 6º to assist in the separation of the container from the tool after the forming. Figure 7 also illustrates a cross-section of the finished container just before it is severed from the sheet material. Figure 8 shows in cross-section part of the base of the container in its final form

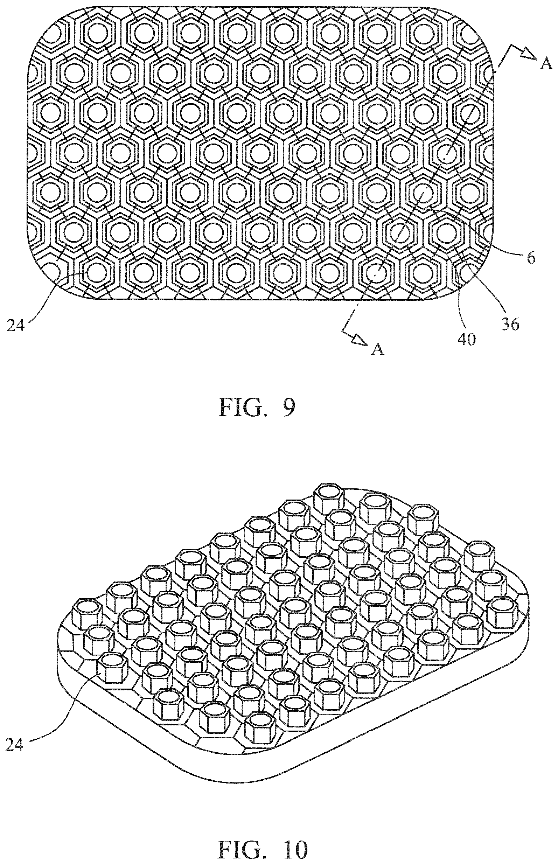

Figure 9 shows a plan view of the base of one embodiment of the container containing an array of 7 rows of recesses providing a total number of 63 recesses distributed generally uniformly over the base of the container. Each recess has a hexagonal outer wall 36 and a cylindrical inner wall 38 defining therebetween an annular recess 40 In this embodiment, the recesses in each row have a spacing therebetween of 4.76 (approx.. 5.0 mm) and the width between the opposed interior faces of the walls of the hexagon shape 36 is approx.. 7.5 mm. The annular spacing between the inner face of the hexagon wall 36 and the cylindrical wall 38 which enables the capillary action typically comprises 0.98 mm (approx 1 mm). In order to maintain the required capillary action, the size and shape of the recesses and the selected annular spacing may vary depending upon characteristics, such as its viscosity, of the liquid. Figure 8 comprises a side view of the container base illustrating the depth, (approximately 5 mm in this embodiment) of the recesses and hence the reservoir space below the main surface of the base of the container. The depth of the recesses may vary depending upon the nature and volume of the liquid emitted by the particular product for which the container is intended.

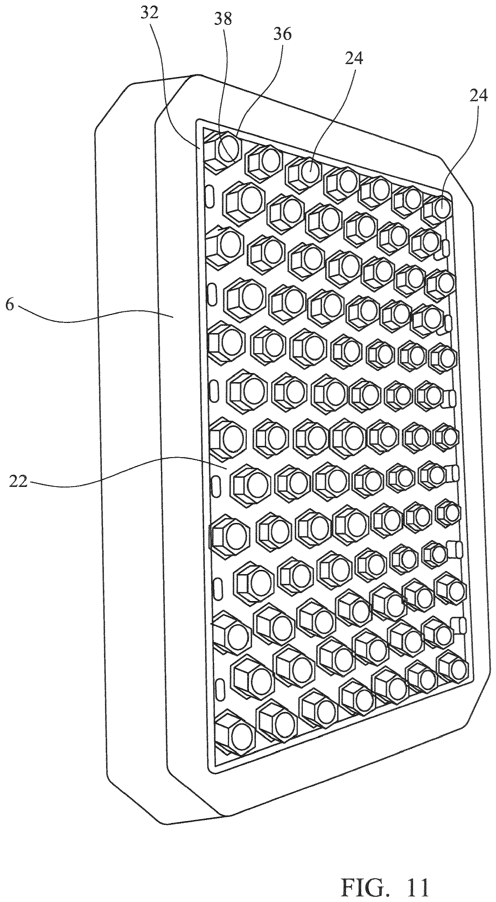

Figure 10 shows a perspective view of part of the underside of the plug forming part of the the array of recesses illustrated in Figure 7, 8 and 9. In operation, the thermo-formable material is forced by air pressure and/or by vacuum against the walls 36a and 38a of the tool to form respectively the outer walls 36 and inner walls 38 in the material. Figure 11 shows a view of the underside of the plug 6 showing the peripheral rib 32 which defines the clamping seal at the periphery of the base 28 of the container and the wall 26 of the container. Within the peripheral clamping seal, the movable insert 22 contain the tool parts, namely the projections 24, which form the recesses 25.

Around the periphery of the base 26, the plane of the base is elevated by 3° as shown in Figure 8 to assist in releasing the finished container from the mould 8.

In certain applications and/or for certain products it is possible for the liquid to form a pool on the flat surface of the base of the container between adjacent recesses, and to overcome this problem the surfaces between adjacent recesses 25 are formed with a run-off ramp to form an incline to enable water on the base of the container to drain into the adjacent recesses. To achieve this, surface of the base between adjacent recesses is provided with a central peak 44 which is 1 mm higher than the peripheral edge 42 of the recess to thus provide a run-off ramp to enable any liquid on the base of the container to drain into the adjacent recess to thereby minimise or eliminate pooling on the base

Although shown as having a hexagonal outer wall and a cylindrical inner wall it will be understood that other shapes of wall may be provided for the recesses. For example, the outer wall may be cylindrical or octagonal and the inner wall may alternatively be, for example, hexagonal or octagonal. It is also possible for one or both of the walls to be fluted.

As shown in Figure 2, the pressure box 10 is closed to trap the sheet material 4 between the frame 8 and the lower edge 12 of the pressure box 10. Thereafter, as shown in Figure 5, air pressure is fed to the space 34 between the pressure box and the plug 12, which urges the plug downwardly until the plug presses the material 4 down until it contacts the base of the mould as shown in Figure 4. In this position, the sheet material is urged by the rib 32 into the groove 30 where it is clamped securely in position. In this way, the material defining the wall 26 of the container is clamped securely in position so that when further moulding takes place on the material at the base of the plug, the material defining the wall 26 of the container cannot flow into the base 28 of the container 2.

Turning now to Figure 7, in this stage of the manufacture, a vacuum is applied through the vacuum pipe 16 to the interior of the plug 12 and the vacuum thus draws the material of the base of the container into the recesses 24 to form the capillary reservoirs 25 in the base of the container.

This has the great advantage that containers in accordance with the present disclosure are formed entirely of the one single PET material which greatly facilitates recycling of the container after use. A further advantage is the elimination of the additional manufacturing steps currently used which rely on supplying a layer of absorbent material to absorb liquid released from the product, the layer being positioned in the base of the container and glued in position. As a result, there is a significant reduction in manufacturing cost of the containers.

In an alternative embodiment, instead of using a vacuum to urge the material into engagement with the insert, air pressure could be applied to the underside of the material to urge the material up into the grooves in the insert. The temperature of the air pressure may be adjusted to ensure that the base of the container remains sufficiently flexible to ensure that the material is drawn or pressed completely into the grooves.

Turning now to Figure 7, the final stage of manufacturing the container is shown. The pressure box 10 is withdrawn, with the plug 14 and a quick blast of release air is applied to the underside of the mould through air supply openings 36 to release the container from the mould 6, from where it passes to a trimming station where the edge of the container walls are trimmed to a desired finished state. The temperature of the release air is low enough such that it does not affect or distort the shape of the moulded parts of the container.

Although the embodiments described have a clamping surface extending around the periphery of the base adjacent the lower part of the container wall,, it is envisaged that a further clamping surface could be provided extending between spaced positions on the peripheral clamping surface to divide the container volume into two parts, the base of one of the parts being provided with recesses having a capillary action as described previously. In this way, it would be possible to provide, for example, a ready meal having a meat or fish product in one part of the container having the recesses with the capillary function and vegetables in the other part. The base of the other part may be shaped to secure or locate a product such as a baked potato or similar vegetables to thereby prevent damage to such products during transit or storage.

It is also envisaged that the base may have one or more predetermined regions defined by clamping lines, the regions having formed therein shapes adapted to the shape of a component to be packaged therein for transportation. In such arrangements, the insert 22 would be formed with a number of insert sections each designed to act on the part of the insert surrounded by a clamping line. Although the array is shown as regularly arranged rows of recesses it is possible to have a non-uniform array of recesses to accommodate, for example, any differences in the leakage rates of different parts of the product being packaged in the container

### Reference List

2. Container
4. Sheet
6. Plug
6a.Outer part of plug
6b. Inner part of plug
8. Mould
8a. Frame
10. Pressure box
11. Downwardly extending wall
12. Lower edge
14. Plug
16. Supply pipe
16a. Supply channels
18. interior space
20. Lower face
22. Insert
24. Projections
25. Recesses
26. Peripheral outer wall
28. Base
30. Peripheral groove
32 Peripheral rib
34. Space
36. Outer Wall
38. Inner Wall
40. Annular recess
42 Peripheral edge
44. Central peak

## Claims

1. A tool for thermoforming a container (2) from a thermo-formable material, the container (2) having a base (28) and an upstanding sidewall or walls, the tool including a mould (8) having a profile shaped to form the exterior shape of the container (2), and a plug (6) adapted to be inserted in the mould (8) to define the interior of the container (2), the plug (6) having a lower face adapted to define the profile of the base (28) of the container (2), wherein the profile of the lower face of the plug (6) has at least one closed clamping line (30, 32) having a clamping surface, the mould (8) having a mating clamping line (30, 32) having a clamping surface, the two clamping surfaces being adapted to clamp the material of the base (28) therebetween around a predetermined area of the base (28) to define and secure the material of the predetermined area of the base (28) separate from the remainder of the material of the container (2), the profile of the lower face of the plug (6) being adapted to form a plurality of hollow projections (24) below the plane of the base (28) to form an array of recesses (25) in said predetermined area of the base (28) of the container (2), **characterised in that**:
each recess (25) comprises a generally annular recess (25) having an outer wall (36) and a central co-axial wall (38), each recess (25) being adapted, in a container (2), to receive and retain by capillary action liquid in the container (2), and in order to prevent liquid forming a pool on the surface of the base (28) of the container (2) between adjacent recesses (25), the profile of the lower face of the plug (6) is shaped so that the surfaces of the base (28) between adjacent recesses (25) are formed with an inclined run-off ramp or ramps to enable liquid on the base (28) of the container (2) to drain into the adjacent recesses (25).

2. A tool according to claim 1 wherein the projections (24) are positioned and shaped to form the recesses (25) in each array with a spacing therebetween of approx. 5.0 mm and a width between the opposed interior faces of the outer walls (36) of the recesses (25) to be approx..7.5 mm and the annular spacing between the face of the outer wall and the inner wall (38) which enables the capillary action is approx. 1 mm. and wherein the projections (24) are dimensioned to form the depth of each recess (25), and hence depth of reservoir space below the surface of the base (28) of the container (2), to be approximately 5 mm.

3. A tool according to claim 1 or 2, wherein the plug (6) is shaped to provide around the periphery of the base (28), a rim section in which rim section the plane of the base (28) is elevated by an angle of 3° to assist in releasing a finished container (2) from the mould (8).

4. A tool according to any one of claims 1 to 3, wherein the surface of the base (28) between adjacent recesses (25) is provided with a generally central peak 1 mm higher than the peripheral edge (42) of the adjacent recesses (25) to thus provide an inclined run-off ramp or ramps to enable any liquid on the base (28) of the container (2) to drain into the adjacent recesses (25).

5. A tool according to claim 1, wherein the clamping surface of the plug (6) extends around the periphery of the lower face of the plug (6) adjacent the side wall of the container (2), the clamping surface of the plug (6) being adapted to engage the clamping surface of the mould (8) to clamp the material of the container (2) therebetween to define and secure the material of the base (28) of the container (2) separate from the material of the peripheral wall of the container (2).

6. A tool according to claim 1 wherein the plug (6) has a further clamping surface extending across the container (2) from a first position on the peripheral clamping surface to a 2^{nd} position on the peripheral clamping surface spaced from the first position, the further clamping surface being adapted to engage a further clamping surface of the mould (8) to clamp the material of the container (2) therebetween to define a predetermined area of the base (28) to define and secure the material of the predetermined area of the base separate from the remaining material of the container (2), said recesses (25) being formed only in said predetermined area.

7. A tool according to any one of claims 1-6, wherein the lower face of the plug (6) has a peripheral groove (30) or rib (32) extending to lie around the periphery of the base (28) adjacent the side wall of the container (2), the groove (30) or rib (32) mating with a corresponding peripheral rib (32) or groove (30) upstanding from the base of the mould (8) to form a clamping surface to securely clamp the material of the container (2) between the mould (8) and the plug (6).

8. A tool according to any one of the preceding claims wherein the profile of the lower face of the plug (6) is formed on an insert secured to the plug (6).

9. A tool according to claim 8, wherein the insert is removably secured to the plug (6) to enable the tool to be readily adapted to produce, selectively, a variety of container (2)s having different base (28) profiles.

10. A tool according to any one of claims 1 to 9, wherein the profile of the lower face of the plug (6) has at least two closed clamping lines having a clamping surface, the mould (8) having two corresponding mating clamping lines having a clamping surface, the clamping surfaces of said two clamping lines each being adapted to clamp the material of the base (28) therebetween around a respective predetermined area of the base (28) to define and secure the material of the predetermined areas of the base (28) separate from the remainder of the material of the container (2).

11. A method of manufacturing a container (2) from a sheet of thermoplastic material including a mould (8) shaped to define the exterior profile of the container (2), placing a sheet of thermoplastic material over the mould (8), warming the sheet of thermoplastic material to a mouldable temperature, the container (2) having a base (28) and an upstanding sidewall wall or walls, providing a plug (6) shaped to provide the internal profile of the container (2) and being adapted to be inserted in the mould (8) to clamp the material to define the container (2) therebetween, forming a lower face of the plug (6) to define the profile of the base (28) of the container (2), applying a vacuum or air pressure to the plug (6) to draw the sheet of material into the profile of the plug (6) therein to form an array of recesses (25) in the base (28) of the container (2),
the method being **characterised in**
forming each recess (25) as a generally annular recess (25) having an outer wall and a central co-axial wall. each recess (25) being adapted, in operation, to receive and retain by capillary action liquid in the container (2), and in order to prevent liquid forming a pool on the surface of the base (28) of the container (2) between adjacent recesses (25), forming the base (28) surfaces between adjacent recesses (25) with a run-off ramp or ramps to enable liquid on the base (28) of the container (2) to drain into the adjacent recesses (25).

12. A method according to claim 11 including the step of forming in the lower face of the plug (6) a peripheral groove (30) or rib (32) extending around the periphery of the plug (6) adjacent the side wall of the container (2), the groove (30) or rib (32) mating with a corresponding peripheral rib or groove upstanding from or formed in the base of the mould (8) to clamp the material of the container (2) securely between the mould (8) and the plug (6), so that the wall of the container (2) and the base (28) of the container (2) can then be subjected to different pressures.

## Patentansprüche

1. Ein Werkzeug zur Thermoformung eines Behälters (2) aus einem thermoformbaren Material, wobei der Behälter (2) einen Boden (28) und eine aufrechte Wand oder Wände besitzt, und wobei das Werkzeug eine Form (8) mit einem Profil umfasst, dessen Gestalt die äußere Form des Behälters (2) bestimmt, sowie einen Einsatzkörper (6), der darauf ausgelegt ist, in die Form (8) eingesetzt zu werden, um das Innere des Behälters (2) zu definieren, wobei der Einsatzkörper (6) eine Unterseite hat, die darauf ausgelegt ist, das Profil des Bodens (28) des Behälters (2) zu definieren, und wobei das Profil der Unterseite des Einsatzkörpers (6) mindestens eine geschlossene Klemmlinie (30, 32) mit einer Klemmfläche hat und wobei die Form (8) eine entsprechende Klemmlinie (30, 32) mit einer Klemmfläche hat und die beiden Klemmflächen so ausgelegt sind, dass sie das dazwischenliegende Material des Bodens (28) um eine vorgegebene Fläche des Bodens (28) festklemmen, um das Material der vorgegebenen Fläche des Boden (28) separat zum restlichen Material des Behälters (2) zu definieren und zu sichern, wobei das Profil der Unterseite des Einsatzkörpers (6) so ausgelegt ist, dass es unterhalb der Ebene des Bodens (28) eine Vielzahl hohler Vorsprünge (24) ausbildet, so dass in der vorgegebenen Fläche des Bodens (28) des Behälters (2) eine Anordnung von Vertiefungen (25) ausgebildet wird, **dadurch gekennzeichnet, dass**:
jede Vertiefung (25) eine allgemein ringförmige Vertiefung (25) mit einer Außenwand (36) und einer zentralen koaxialen Wand (38) umfasst, wobei jede Vertiefung (25) darauf ausgelegt ist, in einem Behälter (2) durch Kapillarwirkung Flüssigkeit in den Behälter (2) aufzunehmen und in diesem festzuhalten, und wobei, um zu verhindern, dass sich eine Ansammlung von Flüssigkeit zwischen benachbarten Vertiefungen (25) auf der Oberfläche des Bodens (28) des Behälters (2) bildet, das Profil der Unterseite des Einsatzkörpers (6) so geformt ist, dass die Oberflächen des Bodens (28) zwischen benachbarten Vertiefungen (25) mit einer geneigten Ablauframpe oder -rampen ausgebildet sind, so dass Flüssigkeit auf dem Boden (28) des Behälters (2) in die benachbarten Vertiefungen (25) ablaufen kann.

2. Ein Werkzeug nach Anspruch 1, wobei die Vorsprünge (24) so positioniert und geformt sind, dass die Vertiefungen (25) in jeder Anordnung mit einem Abstand von ca. 5,0 mm zueinander ausgebildet werden und dass die Breite zwischen den gegenüberliegenden Innenflächen der Außenwände (36) der Vertiefungen (25) ca. 7,5 mm beträgt und dass der ringförmige Abstand zwischen der Oberfläche der Außenwand und der Innenwand (38), der die Kapillarwirkung ermöglicht, ca. 1 mm beträgt, und wobei die Vorsprünge (24) so bemessen sind, dass sie die Tiefe jeder Vertiefung (25) bestimmen und somit die Tiefe des Auffangraums unter der Oberfläche des Bodens (28) des Behälters (2) ca. 5 mm beträgt.

3. Ein Werkzeug nach Anspruch 1 oder 2, wobei der Einsatzkörper (6) so geformt ist, dass er entlang des Umfangs des Bodens (28) einen Randbereich aufweist und in diesem Randbereich die Ebene des Bodens (28) in einem Winkel von 3° angehoben ist, um das Herauslösen eines fertigen Behälters (2) aus der Form (8) zu erleichtern.

4. Ein Werkzeug nach einem der Ansprüche 1 bis 3, wobei die Oberfläche des Bodens (28) zwischen benachbarten Vertiefungen (25) eine allgemein mittige Erhebung aufweist, die 1 mm höher als die Umfangskante (42) der benachbarten Vertiefungen (25) ist, so dass eine geneigte Ablauframpe oder -rampen entstehen, über die Flüssigkeit auf dem Boden (28) des Behälters (2) in die benachbarten Vertiefungen (25) ablaufen kann.

5. Ein Werkzeug nach Anspruch 1, wobei sich die Klemmfläche des Einsatzkörpers (6) entlang des Umfangs der Unterseite des Einsatzkörpers (6) neben der Seitenwand des Behälters (2) erstreckt und die Klemmfläche des Einsatzkörpers (6) so ausgelegt ist, dass sie mit der Klemmfläche der Form (8) zusammenwirkt, um das dazwischenliegende Material des Behälters (2) festzuklemmen und so das Material des Bodens (28) des Behälters (2) separat zum Material der Umfangswand des Behälters (2) zu definieren und zu sichern.

6. Ein Werkzeug nach Anspruch 1, wobei der Einsatzkörper (6) eine weitere Klemmfläche besitzt, die sich quer zum Behälter (2) von einer ersten Position an der umfänglichen Klemmfläche bis zu einer zur ersten Position beabstandeten zweiten Position an der umfänglichen Klemmfläche erstreckt, wobei die weitere Klemmfläche darauf ausgelegt ist, mit einer weiteren Klemmfläche der Form (8) zusammenzuwirken, um das dazwischenliegende Material des Behälters (2) festzuklemmen und so eine vorgegebene Fläche des Bodens (28) zu definieren und das Material der vorgegebenen Fläche des Bodens separat zum restlichen Material des Behälters (2) zu definieren und zu sichern, wobei die Vertiefungen (25) nur in der vorgegebenen Fläche ausgebildet werden.

7. Ein Werkzeug nach einem der Ansprüche 1 bis 6, wobei die Unterseite des Einsatzkörpers (6) eine umfängliche Rille (30) oder Rippe (32) hat, die sich entlang des Umfang des Bodens (28) neben der Seitenwand des Behälters (2) erstreckt, wobei die Rille (30) oder Rippe (32) mit einer entsprechenden umfänglichen Rippe (32) oder Rille (30) zusammenwirkt, die (8) aufrecht vom Boden der Form verläuft, um eine Klemmfläche zu bilden und das Material des Behälters (2) sicher zwischen der Form (8) und dem Einsatzkörper (6) festzuklemmen.

8. Ein Werkzeug nach einem der vorstehenden Ansprüche, wobei das Profil der Unterseite des Einsatzkörpers (6) auf einem am Einsatzkörper (6) befestigten Einsatz ausgebildet ist.

9. Ein Werkzeug nach Anspruch 8, wobei der Einsatz abnehmbar an dem Einsatzkörper (6) befestigt ist, so dass das Werkzeug einfach angepasst werden kann, um selektiv eine Vielzahl von Behältern (2) mit unterschiedlichem Profil des Bodens (28) herzustellen.

10. Ein Werkzeug nach einem der Ansprüche 1 bis 9, wobei das Profil der Unterseite des Einsatzkörpers (6) mindestens zwei geschlossene Klemmlinien mit einer Klemmfläche hat und die Form (8) zwei entsprechende Klemmlinien mit einer Klemmfläche hat und die Klemmflächen der beiden Klemmlinien jeweils so ausgelegt sind, dass sie das dazwischenliegende Material des Bodens (28) um eine entsprechende vorgegebene Fläche des Boden (28) festklemmen, so dass das Material der vorgegebenen Flächen des Bodens (28) separat zum restlichen Material des Behälters (2) festgeklemmt wird.

11. Ein Verfahren zur Herstellung eines Behälters (2) aus einem Bogen thermoplastischen Materials, umfassend eine Form (8), deren Gestalt das äußere Profil des Behälters (2) bestimmt, wobei ein Bogen des thermoplastischen Materials über die Form (8) gelegt und der Bogen des thermoplastischen Materials auf eine formbare Temperatur erhitzt wird, und wobei der Behälter (2) einen Boden (28) und eine aufrechte Seitenwand oder Seitenwände hat, und umfassend einen Einsatzkörper (6), der so geformt ist, dass er das Innenprofil des Behälters (2) ausbildet, und darauf ausgelegt ist, in die Form (8) eingesetzt zu werden, um das Material festzuklemmen und den dazwischenliegenden Behälter (2) zu definieren, und wobei eine Unterseite des Einsatzkörpers (6) ausgebildet wird, um das Profil des Bodens (28) des Behälters (2) zu definieren, und ein Vakuum oder Luftdruck auf den Einsatzkörper (6) ausgeübt wird, um den Bogen des Materials in das Profil des Einsatzkörpers (6) zu ziehen, so dass eine Anordnung von Vertiefungen (25) im Boden (28) des Behälters (2) ausgebildet wird.
Das Verfahren ist **dadurch gekennzeichnet, dass**
jede Vertiefung (25) als allgemein ringförmige Vertiefung (25) mit einer Außenwand und einer zentralen koaxialen Wand ausgebildet wird und dass jede Vertiefung (25) darauf ausgelegt ist, im Betrieb durch Kapillarwirkung Flüssigkeit im Behälter (2) aufzunehmen und festzuhalten, und dass, zur Vermeidung einer Ansammlung von Flüssigkeit zwischen benachbarten Vertiefungen (25) auf der Oberfläche des Bodens (28) des Behälters (2) in den Oberflächen des Boden (28) zwischen benachbarten Vertiefungen (25) eine Ablauframpe oder -rampen ausgebildet sind, so dass Flüssigkeit auf dem Boden (28) des Behälters (2) in die benachbarten Vertiefungen (25) ablaufen kann.

12. Ein Verfahren nach Anspruch 11 umfassend einen Schritt, bei dem in der Unterseite des Einsatzkörpers (6) eine umfängliche Rille (30) oder Rippe (32) ausgebildet wird, die entlang des Umfangs des Einsatzkörpers (6) neben der Seitenwand des Behälters (2) verläuft, wobei die Rille (30) oder Rippe (32) mit einer entsprechenden umfänglichen Rippe oder Rille, die aufrecht vom Boden der Form (8) verläuft oder in diesen eingeformt ist, zusammenwirkt, um das Material des Behälters (2) sicher zwischen der Form (8) und dem Einsatzkörper (6) festzuklemmen, so dass die Wand des Behälters (2) und der Boden (28) des Behälters (2) unterschiedlichen Drücken ausgesetzt werden können.

## Revendications

1. Outil pour thermoformer un récipient (2) à partir d'un matériau thermoformable, le récipient (2) ayant une base (28) et une paroi ou des parois latérale(s) verticale(s), l'outil incluant un moule (8) ayant un profil mis en forme pour former la forme extérieure du récipient (2), et un bouchon (6) adapté à être inséré dans le moule (8) pour définir l'intérieur du récipient (2), le bouchon (6) ayant une face inférieure adaptée à définir le profil de la base (28) du récipient (2), dans lequel le profil de la face inférieure du bouchon (6) a au moins une ligne de serrage fermée (30, 32) ayant une surface de serrage, le moule (8) ayant une ligne de serrage conjuguée (30, 32) ayant une surface de serrage, les deux surfaces de serrage étant adaptées à serrer le matériau de la base (28) entre elles autour d'une zone prédéterminée de la base (28) pour définir et sécuriser le matériau de la zone prédéterminée de la base (28) séparément du reste du matériau du récipient (2), le profil de la face inférieure du bouchon (6) étant adapté à former une pluralité de saillies creuses (24) en dessous du plan de la base (28) pour former une série de retraits (25) dans ladite zone prédéterminée de la base (28) du récipient (2), **caractérisé en ce que** :
chaque retrait (25) comprend un retrait généralement annulaire (25) ayant une paroi externe (26) et une paroi coaxiale centrale (38), chaque retrait (25) étant adapté, dans un récipient (2), à recevoir et retenir par action capillaire du liquide dans le récipient (2), et afin d'empêcher à du liquide de former une flaque sur la surface de la base (28) du récipient (2) entre des retraits adjacents (25), le profil de la face inférieure du bouchon (6) est mis en forme de sorte que les surfaces de la base (28) entre des retraits adjacents (25) sont formées avec une rampe ou des rampes de ruissellement inclinée(s) pour permettre à du liquide sur la base (28) du récipient (2) de s'écouler dans les retraits adjacents (25).

2. Outil selon la revendication 1, dans lequel les saillies (24) sont positionnées et mises en forme pour former les retraits (25) dans chaque série avec un espacement entre eux d'approximativement 5,0 mm et une largeur entre les faces intérieures opposées des parois externes (36) des retraits (25) devant être d'approximativement 7,5 mm, et l'espacement annulaire entre la face de la paroi externe et la paroi interne (38) qui permet l'action capillaire est d'approximativement 1 mm, et dans lequel les saillies (24) sont dimensionnées pour former la profondeur de chaque retrait (25), et par conséquent la profondeur de l'espace de réservoir en dessous de la surface de la base (28) du récipient (2) devant être d'approximativement 5 mm.

3. Outil selon la revendication 1 ou 2, dans lequel le bouchon (6) est mis en forme pour fournir autour de la périphérie de la base (28) une section de bord, dans laquelle section de bord le plan de la base (28) est élevé d'un angle de 3° pour aider à libérer un récipient fini (2) du moule (8).

4. Outil selon l'une quelconque des revendications 1 à 3, dans lequel la surface de la base (28) entre des retraits adjacents (25) est pourvue d'un sommet généralement central 1 mm plus haut que le bord périphérique (42) des retraits adjacents (25) pour fournir ainsi une rampe ou des rampes de ruissellement inclinée(s) pour permettre à tout liquide sur la base (28) du récipient (2) de s'écouler dans les retraits adjacents (25).

5. Outil selon la revendication 1, dans lequel la surface de serrage du bouchon (6) s'étend autour de la périphérie de la face inférieure du bouchon (6) adjacente à la paroi latérale du récipient (2), la surface de serrage du bouchon (6) étant adaptée à s'engager avec la surface de serrage du moule (8) pour serrer le matériau du récipient (2) entre elles pour définir et sécuriser le matériau de la base (28) du récipient (2) séparément du matériau de la paroi périphérique du récipient (2).

6. Outil selon la revendication 1, dans lequel le bouchon (6) a une autre surface de serrage s'étendant en travers du récipient (2) d'une première position sur la surface de serrage périphérique à une 2^{nde} position sur la surface de serrage périphérique espacée de la première position, l'autre surface de serrage étant adaptée à s'engager avec une autre surface de serrage du moule (8) pour serrer le matériau du récipient (2) entre elles pour définir une zone prédéterminée de la base (28) pour définir et sécuriser le matériau de la zone prédéterminée de la base séparément du matériau restant du récipient (2), lesdits retraits (25) étant formés uniquement dans ladite zone prédéterminée.

7. Outil selon l'une quelconque des revendications 1 à 6, dans lequel la face inférieure du bouchon (6) a une rainure (30) ou nervure (32) périphérique s'étendant pour se situer autour de la périphérie de la base (28) adjacente à la paroi latérale du récipient (2), la rainure (30) ou nervure (32) se conjuguant à une nervure (32) ou rainure (30) périphérique correspondante verticale depuis la base du moule (8) pour former une surface de serrage pour serrer de manière sécurisée le matériau du récipient (2) entre le moule (8) et le bouchon (6).

8. Outil selon l'une quelconque des revendications précédentes, dans lequel le profil de la face inférieure du bouchon (6) est formé sur un insert sécurisé au bouchon (6).

9. Outil selon la revendication 8, dans lequel l'insert est sécurisé de manière amovible au bouchon (6) pour permettre à l'outil d'être facilement adapté à produire, sélectivement, une variété de récipients (2) ayant différents profils de base (28).

10. Outil selon l'une quelconque des revendications 1 à 9, dans lequel le profil de la face inférieure du bouchon (6) a au moins deux lignes de serrage fermées ayant une surface de serrage, le moule (8) ayant deux lignes de serrage conjuguées correspondantes ayant une surface de serrage, les surfaces de serrage desdites deux lignes de serrage étant chacune adaptées à serrer le matériau de la base (28) entre elles autour d'une zone prédéterminée respective de la base (28) pour définir et sécuriser le matériau des zones prédéterminées de la base (28) séparément du reste du matériau du récipient (2).

11. Procédé de fabrication d'un récipient (2) à partir d'une feuille de matériau thermoplastique incluant un moule (8) mis en forme pour définir le profil extérieur du récipient (2), placer une feuille de matériau thermoplastique sur le moule (8), chauffer la feuille de matériau thermoplastique à une température moulable, le récipient (2) ayant une base (28) et une paroi ou des parois latérale(s) verticale(s), fournir un bouchon (6) mis en forme pour fournir le profil interne du récipient (2) et étant adapté à être inséré dans le moule (8) pour serrer le matériau pour définir le récipient (2) entre eux, former une face inférieure du bouchon (6) pour définir le profil de la base (28) du récipient (2), appliquer un vide ou une pression atmosphérique au bouchon (6) pour tirer la feuille de matériau dans le profil du bouchon (6) en son sein pour former une série de retraits (25) dans la base (28) du récipient (2),
le procédé étant **caractérisé par** le fait de
former chaque retrait (25) en tant que retrait généralement annulaire (25) ayant une paroi externe et une paroi coaxiale centrale, chaque retrait (25) étant adapté, en opération, à recevoir et retenir par action capillaire du liquide dans le récipient (2), et afin d'empêcher à du liquide de former une flaque sur la surface de la base (28) du récipient (2) entre des retraits adjacents (25), former les surfaces de la base (28) entre des retraits adjacents (25) avec une rampe ou des rampes de ruissellement pour permettre à du liquide sur la base (28) du récipient (2) de s'écouler dans les retraits adjacents (25).

12. Procédé selon la revendication 11, incluant l'étape de formation dans la face inférieure du bouchon (6) d'une rainure (30) ou nervure (32) périphérique s'étendant autour de la périphérie du bouchon (6) adjacente à la paroi latérale du récipient (2), la rainure (30) ou nervure (32) se conjuguant à une nervure ou rainure périphérique correspondante verticale depuis ou formée dans la base du moule (8) pour serrer le matériau du récipient (2) de manière sécurisée entre le moule (8) et le bouchon (6) de sorte que la paroi du récipient (2) et la base (28) du récipient (2) peuvent ensuite être soumises à différentes pressions.
